# EUROPEAN PATENT SPECIFICATION

(11) **EP 0 397 698 B1**
(45) Date of publication and mention of the grant of the patent: **19.01.1994**
(21) Application number: 89900980.7
(22) Date of filing: 17.11.1988
(51) Int. Cl.: C08F 214/18, C08F 218/04, C08F 8/12, C08F 216/06

(54) **FLUORINATED COPOLYMER AND BARRIER FILMS**
FLUORIERTES COPOLYMER UND SPERRSCHICHTEN
COPOLYMERE FLUORE ET FILMS DE BARRAGE

(30) Priority: 20.11.1987 US 123480; 23.11.1987 US 124708
(43) Date of publication of application: 22.11.1990
(73) Proprietor: AlliedSignal Inc., Morristown, New Jersey 07962-2245 (US)
(72) Inventor: MARES, Frank, Whippany, NJ 07981 (US); OXENRIDER, Bryce, Clifford, Florham Park, NJ 07932 (US); SIBILIA, John, P., Livingston, NJ 07039 (US); LONG, David, John, Amherst, NY 14068 (US)
(74) Representative: Brock, Peter William
(86) International application number: US8804106
(87) International publication number: WO8904847

(56) References cited:
- EP-A- 0 071 170
- GB-A- 583 482
- GB-A- 596 943
- US-A- 2 406 717
- US-A- 2 468 664
- US-A- 3 801 550

## Description

### Background of the Invention

This invention is in the field of fluoropolymers, and more particularly relates to fluorine containing copolymers and barrier films made therefrom.

Monomers such as tetrafluoroethylene and chlorotrifluoroethylene have been used to make homopolymers and copolymers.

Typical copolymers based on tetrafluoroethylene or chlorotrifluoroethylene are disclosed in U.S. Patent Nos. 3,624,250; 4,123,602; 3,642,742; 4,513,129; 3,847,881 and P.D. File 82-2155. U.S. Patent No. 4,434,273 discloses perfluorovinyl ethers and copolymers of such materials with tetrafluoroethylene. U.S. Patent Nos. 4,471,076 and 4,500,739 disclose fluorocarbon polymers containing carboxyl groups. U.S. Patent No. 4,513,129 discloses copolymers of ethylene, tetrafluoroethylene or chlorotrifluoroethylene and fluorovinyl compounds of the formula H₂C=CFR_{f} where R_{f} is a fluoroalkyl group of C₂-C₁₀.

Improved barrier resistance of ethylene vinyl alcohol copolymers is disclosed in U.S. Patent No. 4,427,825 and the Background of the Invention thereof, as well as related Patent 4,468,427.

The above review of the art shows a great variety of fluoropolymers and copolymers. Modena, et al. Vinyl Acetate and Vinyl Alcohol Copolymers with Tetrafluoroethylene, European Polymer Journal, 1967, Vol. 3, pp. 5-12, Pergamon Press Limited, England (1967) discloses a specific class of copolymers of vinyl acetate and vinyl alcohols. Copolymers of tetrafluoroethylene and vinyl acetate are disclosed in Great Britain Patent 583,482 and US-A-2468664. The British and U.S. Patents disclose copolymers of tetrafluoroethylene and vinyl acetate but do not disclose polymers of tetrafluoroethylene with vinyl alcohol nor is there a recognition in any of these disclosures of improved barrier resistance to gases such as oxygen.

US-A-3801550 discloses polymers containing
10 to 83% of vinyl fluoride,
17 to 90% of vinyl ester,
0.1 to 12% of unsaturated carboxylic acid, and
0 to 22% of an optional plasticizing comonomer.

These polymers are obtained by polymerizing in an aqueous system at a pressure of 500 to 1000 psi (3.55 to 69.05 MPa) in the presence of free radicals.

The polymers, which are in fact block polymers, may be used to provide surface coatings.

EP-A-0071170 discloses selectively permeable shaped articles formed from polymers of
50 to 80 wt% of fluorinated olefin,
80 to 20 wt% of vinyl acetate, and
0 to 40 wt% of olefins.

These polymers are stated to be produced according to the disclosure of US-A-3445434 and US-A-2468664. These processes have been found to lead to block polymers.

The present invention is directed to a copolymer of a fluoromonomer having the formula R₁R₂C=CR₃F wherein R₁, R₂ and R₃ are selected from H and F, and wherein when R₁ and R₂ are F, R₃ is selected from H, F and Cl; and a vinyl monomer having the formula H₂C=CHRₓ, wherein Rₓ is a radical having the formula O₂CR_{y}, wherein R_{y} is a radical selected from CH₃ and C₂H₅.

The resulting copolymer comprises fluorinated units having the formula (̵R₁R₂C-CR₃F)̵ wherein R₁, R₂ and R₃ are selected from H, F, and Cl and corresponding amounts of vinyl units having the formula (̵H₂C-CHRₓ)̵, wherein Rₓ is a radical having the formula -O₂CR_{y}, wherein R_{y} is selected from -CH₃ and -C₂H₅. In an alternate and preferred embodiment the copolymer is hydrolyzed so that Rₓ becomes -OH.

The copolymer contains from 40 to 60, preferably 45 to 55 mole percent of the fluorinated units and a corresponding amount of the vinyl units. The copolymer can contain up to 10 percent of at least one additional comonomer.

When Rₓ is OH and R₃ is selected from H and F, the copolymer of the present invention is a crystalline polymer. The copolymer has a single melting point peak when measured using a DuPont 990 Differential Scanning Calorimeter (DSC). The procedure is to heat a 7 to 10mg sample at 20°C/minute from room temperature to 300°C. This is followed by a quick quench in liquid nitrogen and reheating to determine reproductibility.

The fluorinated and vinyl units are substantially uniformly and homogeneously distributed along the copolymer chain. This results in the single DSC melting point peak for the hydrolyzed polymer. It is a crystalline polymer with substantially few and preferably no blocks in which either the fluorinated units or vinyl units predominate. This is particularly important for improved barrier properties of film made from the polymer. The major monomer units are preferably, substantially alternating in distribution when there is the preferred amount of from 45 to 55 mole percent of the fluoromonomer and the vinyl monomer.

The copolymer of the present invention is useful to make articles such as fiber, molded bottles and films having at least one layer made from the copolymer of the present invention.

The present invention also includes a method of making the copolymer of the present invention which comprises the steps of copolymerizing monomers having the formulas R₁R₂C=CR₃F and H₂C=CHRₓ as where R₁, R₂, R₃, and Rₓ are defined above. A particularly useful and preferred method to make the copolymer of the present invention is in an aqueous media as disclosed in copending U.S. Serial No 123,480, (Attorney Docket No. 82-2637), hereby incorporated by reference.

### Brief Description of the Drawing

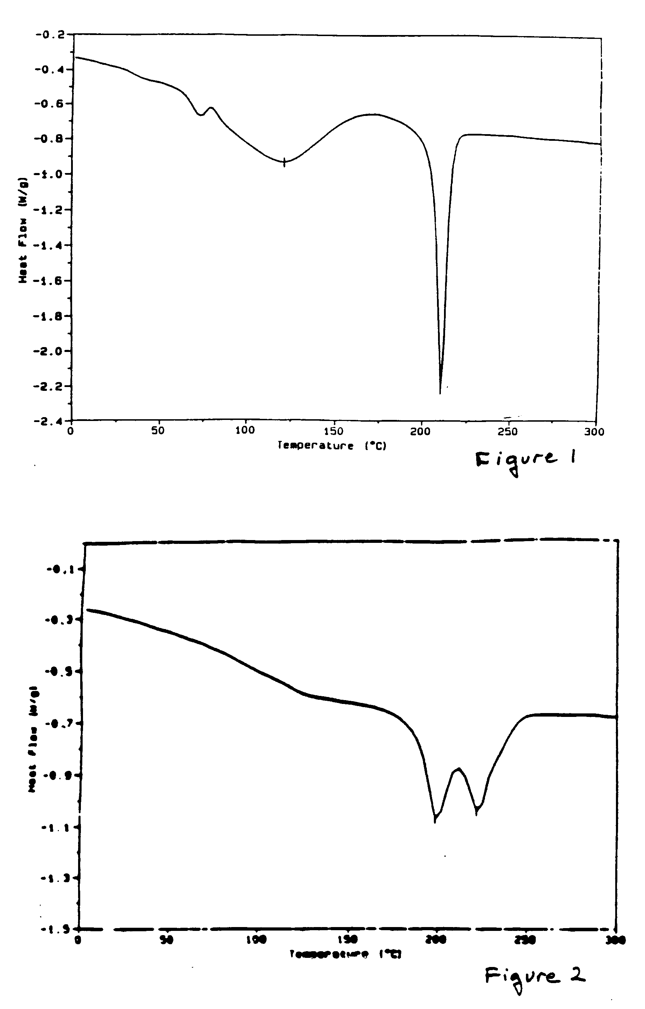

Figures 1 and 2 are Differential Scanning Calorimetry graphs of heat flow (W/g) vs. T (°C) for polymers of the present invention and comparative polymers.

### Detailed Description of the Invention

The present invention is a copolymer of a fluoromonomer having the formula R₁R₂C=CR₃F wherein R₁, R₂ and R₃ are selected from H and F, and wherein when R₁ and R₂ are F, R₃ is selected from H, F and Cl; and a vinyl monomer having the formula H₂C=CHRₓ, wherein Rₓ is a radical having the formula O₂CR_{y}, and wherein R_{y} is a radical selected from CH₃ and C₂H₅.

The resulting copolymer comprises fluorinated units having the formula (̵R₁R₂C-CR₃F)̵ wherein R₁, R₂ and R₃ are selected from H and F, and corresponding amounts of vinyl units having the formula (̵H₂C-CHRₓ)̵, wherein R_{y} is selected from -CH₃ and -C₂H₅. In an alternate and preferred embodiment the copolymer is hydrolyzed so that Rₓ becomes -OH.

The preferred copolymer of the present invention is one where R₁ and R₃ are selected from the group consisting of H and F and are preferably F; R₂ is F; and Rₓ is OH. This embodiment of the copolymer is particularly preferred due to its crystalline properties, and permeation resistance to moisture (H₂O) and oxygen gas (O₂). It is preferred to hydrolyze as many of the ester groups as possible however, minor amounts of residual ester groups may be present. The most preferred polymer is a hydrolyzed copolymer derived from tetrafluoroethylene and vinyl acetate. This is called a copolymer of tetrafluroethylene and vinyl alcohol.

The preferred copolymers of the present invention include but are not limited to copolymers of fluoromonomers selected from vinyl fluoride, trifluoroethylene, tetrafluoroethylene, vinylidene fluoride, and vinyl acetate as the vinyl monomer.

The copolymer of the present invention has from 40 to 60, and most preferably 45 to 55 mole percent of the fluorinated units, and a corresponding amount of the vinyl units.

The polymer can contain minor amounts of up to 10 mole percent of at least a third comonomer. The presence of additional comonomer is not objectionable so long as it does not deteriorate the desired properties of the polymer and in particular does not adversely affect distribution of the two major monomeric units along the copolymer chain, or inhibit the crystallite formation in the hydrolyzed embodiment.

The copolymer of the present invention has a substantially uniform and homogeneous distribution of the two major monomer units along the polymer backbone. In the most preferred embodiment where there are from 45 to 55 mole percent fluorinated units and corresponding amounts of vinyl units, the two units are preferably substantially alternating in their distribution. The procedure for determining degree of alternation is by ¹H Fourier Transform Nuclear Magnetic Resonance Spectroscopy. The procedure is reviewed in detail below. For the purpose of the present invention Substantially alternating is at least 40% alternating as measured by this procedure. Typically alternating values are from 40 to 80%. It is believed that there are amounts of end groups, and short segments such as segments having dimer and trimer length which are not measured as alternating but are not considered blocks which significantly alter the properties of a copolymer of the present invention.

The copolymer of the present invention wherein the vinyl unit is a vinyl alcohol, is an advancement due to the structural relationship of the two major monomeric units and the resulting crystallinety of the copolymer. The polymer has a single melting point peak when measured using a Differential Scanning Calorimeter (DSC) (Figure 1). The DSC used to characterize the present invention is a DuPont 9900 thermal analyzer. The precedure is to use a 7 to 10 mg sample of the copolymer heated at 20°C minute from room temperature to 300°C. The samples were quick quenched in liquid nitrogen and reheated to determine reproducibility.

The hydrolyzed, crystalline copolymer of the present invention is an improvement over copolymers having tetrafluoroethylene units and vinyl units known in the art which are bimodal. The art discloses copolymers that have been inherently block copolymerized resulting in tetrafluoroethylene unit rich blocks and vinyl unit rich blocks. DSC testing of prior art hydrolyzed broad copolymers, results in two broad peaks. There is a broad melting point peak from the tetrafluoroethylene unit rich blocks and a separate broad melting point peak from the second monomer, i.e., the vinyl alcohol, rich blocks (Figure 2).

The copolymer of the present invention has no mutually immiscible phases of either the fluorinated units or the vinyl units to result in separate peaks when measuring the DSC of the copolymer according to the process recited above; or which are apparent when a sample of the composition is viewed under a Transmission Electron Microscope (TEM) at a magnification of 15,000 to 25,000.

The molecular weight of the copolymer of the present invention can be varied as desired. The intrinsic viscosity of the copolymers of the present invention measured at 35°C in dimethylformamide (DMF) according to the ASTM D-1238 procedure is from 0.1 to 2.5 preferably from 0.2 to 1.5, more preferably from 0.3 to 1.0 and most preferably 0.5 to 0.9.

The polymer of the present invention can be made in an aqueous medium or in a suitable solvent. A useful and preferred method is disclosed in copending application Ser. No. 123,480 filed November 20, 1987 (Attorney Docket No. 82-2637).

The preferred method as recited in the referenced application is copolymerizing a vinyl monomer of the formula H₂C = CHRₓ, where Rₓ is the radical O₂CR_{y}, where R_{y} is a radical selected from CH₃ and C₂H₅; and fluoromonomer of the formula: R₁R₂C = CFR₃ wherein R₁, R₂ and R₃ are the same or different and are selected from the group consisting of H, and F, and where R₃ is selected from Cl and F, when R₁ and R₂ are F. The aqueous medium comprises from 50 to 99, preferably 55 to 90, and more preferably 60 to 85 percent by weight of water and a corresponding amount of a water miscible cosolvent. The cosolvent should be water soluble and have low chain transfer properties. The fluoromonomer should have greater solubility in the aqueous medium as a result of the cosolvent. The vinyl monomer is soluble in the aqueous medium. The amount of vinyl monomer is limited to that amount which is soluble in the aqueous solution. The copolymerization is preferably conducted in the presence of a water soluble initiator and may optionally contain a water soluble fluorosurfactant which preferably has groups selected from alkali metal sulfonates, alkali metal corboxylates, ammonium carboxylates, and ammonium sulfates. The copolymerization is initiated in the homogeneous aqueous solution. Copolymer particles form. The cosolvent preferably causes the copolymer particles to swell. The monomers including the fluoromonomer are carried into the swollen particles with the cosolvent. Resulting in homogeneous and preferably alternating copolymer.

The aqueous medium is fed to a reactor with a vinyl monomer, and optionally the surfactant. The fluoromonomer is fed to the reactor and maintained at a constant pressure throughout the course of polymerization with some dissolved in the aqueous solution. The temperature is controlled and the initiator is injected. The preferred initiator is an oxidation-reduction system. Polymerisation is initiated in the homogeneous mixture of comonomers. The polymerization results in the suspension of polymer particles which are swollen by the cosolvent. The comonomers diffuse into the particles of the growing polymers chains. Vinyl monomer is fed concurrently in rates equivalent to consumed fluoromonomer so as to maintain the desired copolymer composition.

Another useful method to make the copolymers of the present invention comprises the step of copolymerizing R₁R₂C=CR₃F and H₂C=CHRₓ in a chlorofluorocarbon solvent at a temperature range of above the freezing point of the solvent, preferably from -20°C to 100°C, preferably from 0°C to 50°C, and most preferably from 20°C to 40°C in the presence of a polymerization initiator. The pressure is provided by the fluoromonomer and an inert gas such as nitrogen as well as the vapor pressure of the solvent. The pressure is typically from 1 atm to about 30 atm, preferably from 1 atm to 25 atm. The amount of polymer formed can be determined by measuring the amount of monomers consumed. The process can be batch or continuous.

Saturated fluoro or chlorofluorocarbon, solvents preferably having 1 to 4 especially 1 to 2 carbon atoms, are preferred as the non aqueous copolymerization reaction medium. Suitable solvents include solvents in which both the fluoromonomer and vinyl monomer are soluble and include: dichlorodifluoromethane, trichloromonofluoromethane, chlorotrifluoromethane, trichlorotrifluoroethane, dichlorotetrafluoroethane, hexafluoroethane, perfluoropropane, perfluorocyclobutane and mixtures thereof. It is preferred to use a saturated fluoro- or chlorofluorocarbon which does not have a C-H bond in the molecule.

Useful solvents, also include those having low chain transfer properties. Such solvents include acetic acid, methyl acetate, ethyl acetate, t-butyl alcohol and acetonitrite. The amount of solvent used

is not limited. The copolymerization reaction can be carried out by using a suitable amount of solvent. Useful amounts have been found to be from about 10 to 100 ml of solvent to each gram of polymer produces.

The reaction temperature can be determined depending upon the type and amount of solvent, the molar ratio of the monomers, the type of polymerization initiator, whether there is external cooling.

As indicated above, a wide variety of polymerization initiators can be used depending upon the polymerization system. Organic peroxy compounds or azo compounds are preferred.

Suitable peroxy compounds such as free radical initiators can be the perfluoroperoxides such as bis(perfluorobutyryl) peroxide, bis(perfluorooctanoyl)peroxide, or aza compounds, such as azabisisobutyronitrile.

The quantity of initiator is not critical. However, it is necessary to use a sufficient amount to effectively carry out the copolymerization reaction. For example when using ammonium persulfate results are attainable when the initiator is used in amounts of more than about 0.0001 part, preferably 0.001 parts to 1.0 parts by weight per 100 parts by weight of total monomers.

The concentration of the free radical initiator in the chlorofluorocarbon type solvent is typically more than 0.001, and preferably 0.001 to 0.5 parts by weight per 100 parts by weight of total monomers initially charged.

When a chlorofluorocarbon type solvent is used, the solvent can be easily separated together with the unreacted monomers from the resulting copolymers after the copolymerization.

Copolymers having a vinyl unit where Rₓ is O₂CR_{y}, can be hydrolyzed to vinyl alcohol by suitable means. A preferred method is by contacting the ester copolymer, in solution, with a strong base such a sodium hyroxide. A useful solvent is an alcohol such a methanol. The typical hydrolysis can be conducted at from -10°C to 100°C, depending on the boiling point of the solvent. Depending on temperature the reaction can be conducted at from 30 minutes to 24 hours. It is convenient to hydrolyze the copolymer at atmospheric pressure.

The hydrolyzed copolymer of the present invention is useful for making a variety of articles. In particular, it has been found to have exceptional resistance to permeation by gases such as oxygen. It is therefore useful to make articles having one or more layers of this polymer where oxygen permeation or improved oxygen barrier is critical such as in films and bottles. It also has improved resistance to water vapor transmission. This is believed to be a result of the tightly packed crystalline structure of the hydrolyzed copolymer.

Ethylene vinyl alcohol copolymers are known to have excellent resistance to oxygen permeation at low humidities. As the relative humidity increases to from 70 to 100 percent, the oxygen permeability increases. However, when using the copolymer of the present invention, the oxygen permeability remains relatively constant even at high humidy conditions of from 70 to 100 percent relative humidity.

Films can be made by conventional film forming processes including casting and extruding. The film can be used alone or in combination with other layers as a laminate formed by coextrusion or by building up separate layers of film. The use of adhesive layers is optional and depends on the composition of the adjacent film layers.

A particularly convenient method of production of film laminates is the simultaneous coextrusion of several resins as a laminate extrudate. Such coextrusion methods are well known in the art.

The film and film laminates made by the present invention may be oriented by conventional means and/or embossed as desired.

In addition to making films, and film laminates the polymer of the present invention can be formed by other forming processes including blow molding to form bottles as well as molded parts and formable sheets. The copolymer can be compounded with conventional additives known in the art. Such additives include fillers, other polymeric materials such as impact modifiers, and inhibitors of oxidative, thermal, and ultraviolet light degradation, lubricants and mold release agents, colorants including dyes and pigments, fibers and particulate filler and reinforcements, plasticizers, etc.

Compositions containing the polymer of the present invention can be prepared by melt blending in a closed system such as an extruder, or other conventional plasticating devices. Compositions of the present invention can be blow molded. Alternately, the polymer can be processed by precipitation from solution, blending or by dry mixing with other components followed by melt fabrication of the dry mixture by extrusion or molding.

In addition to the articles mentioned above, the polymer can be used in a variety of articles made by conventional fabrication methods to form tubing, sheet, fibers and oriented fibers, and wire coating.

Several examples are set forth below to illustrate the nature of the invention and the manner of carrying it out. However the invention should not be considered as being limited to the detail thereof. All parts are by weight unless otherwise indicated.

### Examples 1 - 5

The following examples illustrate the preparation of a copolymer of tetrafluoroethylene (TFE) and vinyl acetate. The polymerization was conducted using fluorocarbon G-113 (1,1,2-trichloro-1,2,2,trifluoroethane) as a solvent. The initiator used was bis(perfluorobutyryl) peroxide (4-p). The reaction was conducted in a 500 cm³ or 4 liter closed reactor. The reactants were stirred at a stir rate of 200 rpm. The atmosphere above the solvent was a mixture of nitrogen and TFE held at a constant pressure. The copolymer was collected as a gelatinous mass and dried to a white solid. The processing conditions are summarized in Table 1. The composition in each case was determined by elemental analysis. The percents by weight of C, H, and F are summarized below. The intrinsic viscosity [n] was measured at 35°C in dimethyl foramide (DMF).

**TABLE 1**

| | Ex. 1 | Ex. 2 | Ex. 3 | Ex.4 | Ex. 5 |
|---|---|---|---|---|---|
| Solvent | 400 | 400 | 300 | 300 | 2100 |
| G-113, cm³ | | | | | |
| 4-P, mg | 50 | 50 | 50 | 50 | 350 |
| VAc, (g) | 3 | 3 | 3 | 3 | 35 |
| initial | | | | | |
| VAc, (g/h) | 1.5 | 1.5 | 1.5 | 1.5 | 7 |
| feed | | | | | |
| N₂, KPa(psi) | 172.4(25) | 344.8(50) | 262.0(38) | 262.0(38) | 258.6(37.5) |
| TFE, KPa(psi) | 344.8(50) | 689.5(100) | 517.1(75) | 517.1(75) | 517.1(75) |
| stir, rpm | 200 | 200 | 200 | 200 | 200 |
| time, min | 354 | 150 | 200 | 420 | 375 |
| drying, T,P(°C,mm) | 50°,1mm | 50°,1mm | 80°,1mm | 80°,1mm | 65°- |
| Yield, g | 14.4 | 10.9 | 9.4 | 11.8 | 91.1 |
| [n] | 0.99 | 2.47 | 1.18 | 1.49 | 1.01 |
| % C | 38.32 | 35.79 | 39.23 | 38.87 | 39.23 |
| % M | 3.90 | 2.50 | 3.44 | 3.59 | 3.39 |
| % F | 37.00 | 42.0 | 40.85 | 39.33 | 40.75 |
| Tg, °C | -- | 40 | -- | -- | -- |
| TGA, 5% wt loss @ | -- | 370°C | -- | -- | -- |
| VAc: TFE | 0.85:1 | 0.71:1 | 1:1 | -- | 1.05:1 |

### Example 6

Example 6 illustrates the hydrolysis of a tetrafluoroethylene, vinyl acetate copolymer made from Example 2. 10.4 grams of the copolymer was stirred in 150 cm³ of methanol chilled to 5°C. A solution of 10.4 cm³ of a 50 percent aqueous sodium hydroxide solution was added dropwise controlling the rate to maintain the temperature at 10°C. The reaction mixture was stirred at room temperature for 16 hours. The hydrolyzed copolymer was recovered by pouring the solution into one liter of ice water in a Waring Blender. The copolymer was filtered from the solution and was dried at room temperature, 133 Pa (1 mm Hg) pressure for 18 hours. The copolymer was a white solid, and the yield was 7.5 grams. DSC indicates a melting point of 222°C. The thermal gravimetric analysis (TGA) indicates a 5 percent weight loss by 370°C with a major decomposition taking place over 400°C.

The hydrolyzed tetrafluoroethylene-vinyl acetate (now tetrafluoroethylene/vinyl alcohol) copolymer was dissolved in 200 ml of acetone at room temperature for 3 hours. It was then filtered through a coarse 0.25 - 0.42 mm (40-60 mesh) frit, then a 7.0 µm filters. The polymer was again recovered by pouring into one liter of ice water in a Waring Blender and filtering. It was pressed free of excess water and dried at room temperature at a pressure of 133 Pa (1 mm Hg). The yield was 5.9 grams. The intrinsic viscosity was 2.17 in acetone. The intinsic viscosity was 2.01 (10.4 insolubles) at 30°C, using DMF. The ratio of vinyl alcohol/TFE was 1:1. The percent carbon was 31.0; percent hydrogen 3.3 and percent florine 49.1. The sample was formed into a film and tested for oxygen permeability using an Ox-Tron 1000 oxygen permeability tester made by Mocon Corp. The oxygen permeability was at 0% relative humidity (RH) was 60.6 cm³/m²/µm/day (0.154 cc/100 sq in/mil/day). At 100% relative humidity the oxygen permeability was 275.6 cm³/m²/µm/day (0.70/cc/100 sq in/mil/day).

### Example 7

Following is a procedure for the hydrolysis of a vinyl acetate/tetrafluoroethylene (VAC/TFE) copolymer to vinyl alcohol/tetrafluoroethylene (VOH/TFE). 8.1 grams of the VAC/TFE made in Example 3 and 11.5 grams of the VAC/TFE made in Example 4 (totaling 19.6 grams, or 105 millimoles) was stirred in a 3 neck 100 cm³ round bottom flask containing a stir bar and a thermometer as well as a water condenser and an nitrogen inlet. The flask contained 390 cm³ of methanol, 8.4 cm³ of 50 percent aqueous sodium hydroxide plus 18 cm³ of water. The mixture was heated and refluxed at 67°C for 2 hours. A yellow solution formed with small amount of undissolved material. 12 ml of concentrated HCl (pH 1) were added. The solution became milky white and the yellow color was gone. The polymer was precipitated out by adding 100 cm³ of the polymer solution to 300 cm³ of water plus 100 cm³ of ice in a Waring Blender. The solids were collected in five batches. The combined solids were washed three times in 350 cm³ of water with 100 cm³ of ice and then dried in a vacuum oven at 80°C overnight at about 1.6 KPa (12 ml of mercury). 13.6 grams of off-white solids were obtained and redissolved in acetone at room temperature. The solids were filtered and then precipitated out using an 800 cm³ polymer solution in 400 cm³ of chilled water which had been passed through a milli pore filter. The solids were once again washed three times with 500 ml of chilled, filtered water. The solids were dried in a vacuum oven for almost 20 hours at 81°C. 11.8 grams of a light cream colored free flowing solid was recovered. This material was found to have 33.31 percent C, 2.81 percent H, and 52.66 percent F. The sample was formed into a film and tested for oxygen permeability using an Ox-Tran 1000 oxygen permeability tester made by Mocon Corp. At 0 percent relative humidity a 81.3 µm (3.2 mil) thick film had from 0.0 to 0.91 cm³/m²/day (0.0 to 0.059 cc per 100 sq. in. per day) which corresponds to 0 to 70.9 cm³/m²/µm/day (0.00 to 0.18 cc per 100 sq in per mil per day). The sample was tested at 100 percent relative humidity and had 0.0 to 5.9 cm³/m²/day (0.0 to 0.1194 cc per 100 sq in per day) and 0 to 149.6 cm³/m²/µm/day (0.00 to 0.38 cc per 100 sq in per mil per day).

### Example 8

Example 8 is laboratory example of hydrolyzing the vinyl acetate/TFE copolymer made in Example 5. The vinyl acetate/TFE copolymer was hydrolyzed with a 50 percent aqueous sodium hydroxide solution at a concentration of 0.0125 g per cm³ in methanol and water in presence of heat. The procedure was similar to that of Example 7 except a 2 liter flask was used. The flask was charged with 85.3 g of the vinyl acetate/TFE copolymer, 853 cm³ of methanol, 17.1 cm³ of water and 37.7 cm³ of aqueous 50 percent sodium hydroxide. It was heated to reflux and held for 2.5 hours. The result was a fairly clear amber very viscous solution having a pH of about 11. About 25 g of Celite® filter aid sold by Aldrich was added and it was filtered. It was acidified with a total of 87 cm³ of concentrated hydrochloric acid to a pH of about 1. After filtering, the solids were collected and dried at about 44°C overnight at a pressure of 133 Pa (1mm Hg). About 58.8 g of cream colored solvent were recovered. The viscosity at 35°C in DMF was measured to be 1.54. The TGA of the sample showed about a 1 percent weight loss between room temperature and 100°C. This followed by a stable plateau up to 325°C. The main degradation occurred above that point. DSC was measured on an 8.4 mg sample and indicated a single melting point of about 210°C. Upon reheating, after quenching from 300°C the main melt point appears at 208°C. This is shown on Figure 2 which is a plot of watts/grams (W/g) vs. T(°C).

The following table summarizes test results made using the copolymer produced in Example 5 and the hydrolyzed copolymer made in Example 8. Molecular weight was measured by low angle laser light scattering using a Chromatic KMₓ-6 instrument using solutions of 0.1 to 0.8 % by wt. concentration of copolymer in pyridine at room temperature. Tensile testing was conducted at 23°C, 50 percent relative humidity using ASTM D-638. Samples were molded using a hydraulic platen press at 260°C (500°F) in a two piece 12.7 mm (5 inch) closed mold. Type C tensile samples and DMA specimens were molded. The DMA was determined on a Polymer Laboratories DMTA in an inert atmosphere in the temperature range of -120°C to 175°C at a heating rate of 30°C/minute. The frequency was 1 hertz and the sample size was 1.9 x 9.5 x 5 mm. There were two peaks, one at 81°C and the other at 134°C. The first peak is believed to be the result of the glass transition temperature of the amourphous phase and the second peak at 134°C is believed to result from the motion of segments in the interfacial regions between the amorphous and crystalline phases. Tensile results are summarized in Table 2 below.

**Table 2**

| | Ex. 5 | Ex. 8 |
|---|---|---|
| Polymer | TFE/VAC | TFE/VOH |
| Mwt | 6.75x10⁵ | 5.00x10⁵ |
| Yield stress MPa (psi) | -- | 20478 (2.97x10⁶) |
| Yield strain (%) | -- | 10.4 |
| Max load Kg (lb) | -- | 123 |
| Tensile strength MPa (psi) | -- | 47.05 (6824) |
| Total Elong (%) | -- | 91.6 |
| Break Str MPa (psi) | -- | 46.96 (6810.6) |

### Example 9

Example 9 illustrates the preparation of a copolymer of vinyl acetate and TFE using 750 ml of ethyl acetate as a solvent in a 4 liter stirred reactor. The initiator used was 250 mg azobis(isobutyrylnitrile) (ABN). Twenty five grams of vinyl acetate was added to the ethyl acetate and ABN under about 517.1 KPa (75 psi) of nitrogen at the conditions summerized on Table 3 below. This was followed by the addition of 1.03 MPa (150 psi) of TFE. The reactants were stirred at 200 rpm.

**Table 3**

| Time (min) | P MPa(psi) | Temp (°C) | Comment |
|---|---|---|---|
| 0.0 | 0.50(67.5) | 23 | Solvent, vinyl acetate, ABN,N₂ |
| 0.0 | 1.41(205.0) | 23 | TFE to maintain P=205 psi heater set for 53°C |
| 8.0 | 1.42(206.4) | 41 | |
| 12.0 | 1.57(228.1) | 58 | P set for TFE to maintain 225 psi |
| 14.0 | 1.60(232.7) | 60 | |
| 16.0 | 1.61(234.1) | 61 | |
| 18.0 | 1.62(234.4) | 60 | |
| 20.0 | 1.61(233.5) | 59 | |
| 24.0 | 1.59(231.3) | 58 | heater set for 60°C |
| 45.0 | 1.60(232.5) | 60 | |
| 60.0 | 1.59(230.4) | 60 | reacter cooled and vented |

The reacted solution was evaporated with a rotary evaporator. The residue was dissolved in acetone (100 ml), precipitated in 1 liter of water and dried at 65°C. The yield was 22.8g having an intrinsic viscosity at 35°C in DMF of 0.23 (0% insolubles). Elemental analysis indicated 38.90 wt % C, 3.09 wt % H, and 38.9 wt % F. The ratio of vinyl acetate to TFE was about 1:1. Proton nuclear magnetic resonance (Proton NMR) indicated that the vinyl acetate and TFE were 62% alternating. The procedure used is as follows:
Vinyl acetate/tetrafluoroethylene copolymers (VAC/TFE) can be analyzed by ¹H Fourier Transform Nuclear Magnetic Resonance Spectroscopy for the presence of alternating VAC/TFE units and VAC blocks. The samples are dissolved in acetone-d₆ and analyzed by a Varian XL-200 NMR spectrometer operating at 200 MHz. The methine hydrogens of the vinyl acetate group give resonances at 4.9, 5.3, 5.6 and 6.0 ppm. The 6.0 ppm resonance is assigned to the methine proton of alternating vinyl acetate units (flanked by TFE units on either side). The 5.3 and 5.6 ppm resonances can be assigned to methine protons of the end VAc units of vinyl acetate blocks where the resonance at 5.6 ppm is adjacent to a TFE unit and the 5.3 ppm resonance is separated from a TFE unit by a methylene group. The resonance at 4.9 ppm is at the same frequency as the methine protons of polyvinyl acetate and represents the methine protons of vinyl acetate units in VAc blocks that are not directly adjacent to TFE units. The ratio of the integrated area of the 6.1 ppm peak to the total integrated area of the four peaks between 4.7 and 6.3 ppm gives the fraction of alternating vinyl acetate in the polymer. There is insufficient information in the proton spectrum to determine the length of the vinyl acetate blocks.

### Example 10

Example 10 illustrates the preparation of a copolymer of vinyl acetate and TFE using 750 cm³ of acetic acid as a solvent in a 4 liter stirred reactor. The initiator used was 250 mg of ABN.

Twenty five grams of vinyl acetate was added to the acetic acid and ABN under about (517.1 KPa (75 psi) of N2 at the conditions summarized in Table below. This was followed by the addition of 1.03 MPa (150 psi) of TFE. The reactants were stirred at 200 rpm.

**Table 4**

| Time (min) | P MPa (psi) | Temp (°C) | Comment |
|---|---|---|---|
| 0.0 | 0.45(67) | 24 | acetic acid, vinyl acetate ABN, N₂ added |
| 0.0 | 1.37(199.4) | 24 | TFE added to a P=199.4 |
| 9.0 | 1.38(200.0) | 23 | |
| 16.5 | 1.37(199.2) | 22 | |
| 21.0 | 1.37(199.2) | 22 | |
| 25.0 | 1.37(199.2) | 22 | |
| 30.0 | 1.37(199.2) | 22 | heater is set at 60°C |
| 41.0 | 1.66(241.2) | 57 | |
| 43.5 | 1.70(247.2) | 59 | |
| 52 | 1.74(251.9) | 60 | |
| 62 | 1.73(250.6) | 60 | |
| 72 | 1.72(250.1) | 60 | |
| 77 | 1.72 249.2 | 61 | |
| 82 | 1.71(248.0) | 60 | |
| 91 | 1.71(248.2) | 61 | reacter cooled and vented |

The reactants were obtained by evaporation and precipitation similar to Example 9. The yield was 29.8g having an intrinsic viscosity at 35°C in DMF of 0.38 (0% insolubles). Elemental analysis indicated 40.69 wt % C; 2.88 wt % H; and 36.24 wt % F. The mole ratio of vinyl acetate to TFE was 1.25 to 1.

### Comparative Example 1

This Comparative Example illustrates a vinyl acetate/TFE copolymer of the type known in the art and the hydrolysis product of this product to a vinyl alcohol/TFE copolymer. This copolymer has a different structure than the copolymer of the present invention. This is believed to be due to the polymerization process of the vinyl acetate/TFE . The copolymer of this Comparative was prepared by adding 800 cm³ of water, 200 cm³ of acetic acid; 517.1 KPa (75 psi) N₂; 15 grams of vinyl acetate. The pressure of 1.03 MPa (150 psi) was maintained and 15 g/h of vinyl acetate added.
The mixture was heated to 60°C. Then 1.03 MPa (150 psi) TFE and APS were added. The reactants were stirred at 1500 rpm. The conditions are summarized in Table 5 below.

**Table 5**

| RX Time (Min) | P MPa (psi) | Temp (°C) | Comment |
|---|---|---|---|
| 0.0 | 0.46(67.2) | 22 | H₂O, acetic acid, 15g vinyl acetate, heat to 60°C |
| 0.0 | 1.39(201.7) | 23 | TFE |
| 0.0 | 1.60(232.1) | 60 | APS added |
| 0.0 | 1.60(232.2) | 60 | |
| 5.0 | 1.61(232.8) | 61 | |
| 7.0 | 1.60(232.1) | 61 | |
| 8.0 | 1.60(231.4) | 61 | |
| 9.0 | 1.59(230.6) | 61 | |
| 39.0 | 1.58(229.3) | 60 | reactor cooled and vented |

The solid residue was filtered, washed with water and dried at 65°C. The yield was 37.9 grams. The intrinsic viscosity at 35°C in DMF was 0.60 (5% insolubles). Elemented analysis indicated 36.72 wt% C; 2.61 wt% H; and 46.51 wt% F. The mole ratio of vinyl acetate to TFE was 1:1.3.

The copolymer was hydrolyzed in a 500 cm³ flask. 30.8g, (0.1426 moles) was added to 308 cm³ of methyl alcohol, 50% aqueous NaOH (5.7g, 14.41 cm³, 0.1426 mole) and 6 cm³ of water under a N₂ atmosphere. The mixture was refluxed for 1 hour at 67°C and then filtered. 5 cm³ of concentrated HCl were added to obtain a pH of 6-7. The mixture was precipitated, and dried at 85°C to recover 14.9g or a yellow polymer. TGA indicated the main degradation temperature was over 400°C. The DSC was measured and showed melting point peaks at 202°C and 222°C and after quick quenching in liquid nitrogen and reheating, the double peak was still present at 198°C and 220°C. (Fig.2) The intrinsic viscosity was 0.55 at 35°C in DMF.

## Claims

1. A copolymer comprising fluorinated units having the formula (̵R₁R₂C-CR₃F)̵ wherein R₁, R₂ and R₃ can be the same or different and are selected from the group consisting of H and F, and wherein when R₁, and R₂ are F, R₃ is selected from H, F and Cl; and vinyl units having the formula (̵H₂C-CHRₓ)̵, wherein Rₓ is a radical selected from OH and O₂CR_{y}, and wherein R_{y} is a radical selected from CH₃ and C₂H₅ characterized by containing 40 to 60 mole percent of fluorinated units and correspondingly from 60 to 40 mole percent of vinyl units in a substantially alternating distribution.

2. The co-polymer as recited in claim 1 wherein:
R₁ and R₂ are F;
R₃ is selected from the group consisting of H, F and Cl; and
Rₓ is OH.

3. The copolymer of claim 2 wherein: R₁, R₂ and R₃ are F; and Rₓ is OH.

4. The copolymer as recited in claim 1 containing up to 10 mole percent of a third comonomer.

5. The copolymer as recited in claim 1 having from 45 to 55 mole percent each of fluorinated units and correspondingly 55 to 45 mole percent of vinyl units.

6. An article having at least one layer comprising a copolymer of claim 2.

7. An article as recited in claim 6 comprising a copolymer of claim 3.

8. The article as recited in claim 6 in the form of a film, film laminate or co-extruded film.

9. A method comprising copolymerizing a vinyl monomer of the formula H₂C-CHO₂CR_{y} where R_{y} is a radical selected from CH₃ and C₂H₅ and a fluoromonomer having the formula R₁R₂C=CR₃F wherein R₁, R₂ and R₃ are the same or different and are selected from the group consisting of H, Cl, and F, and wherein R₃ is selected from Cl and F when R₁ and R₂ are F, comprising copolymerizing the vinyl monomer and the fluoromonomer in an aqueous medium comprising water and a water miscible cosolvent.

10. The method as recited in claim 9 wherein the cosolvent is acetic acid.

## Patentansprüche

1. Copolymer mit fluorierten Einheiten mit der Formel R₁R₂C=CR₃F , worin R₁, R₂ und R₃ gleich oder verschieden sind und aus der aus H und F bestehenden Gruppe ausgewählt sind, und worin R₃, falls R₁ und R₂ F sind, aus H, F und Cl gewählt ist; und Vinyleinheiten mit der Formel H₂C=CHRₓ , worin Rₓ ein aus OH und O₂CR_{y} gewähltes Radikal ist, worin R_{y} ein aus CH₃ und C₂H₅ gewähltes Radikal ist, dadurch gekennzeichnet, daß es 40 bis 60 Molprozent fluorierter Einheiten und dementsprechend 60 bis 40 Molprozent Vinyleinheiten in im wesentlichen alternierender Verteilung enthält.

2. Copolymer nach Anspruch 1, worin:
R₁ und R₂ gleich F sind;
R₃ aus der aus H, F und Cl bestehenden Gruppe gewählt ist; und
Rₓ gleich OH ist.

3. Copolymer nach Anspruch 1, worin: R₁ und R₂ und R₃ gleich F sind; und Rₓ gleich OH ist.

4. Copolymer nach Anspruch 1, welches bis zu 10 Molprozent eines, dritten Copolymers enthält.

5. Copolymer nach Anspruch 1 mit jeweils 45 bis 55 Molprozent fluorierter Einheiten und dementsprechend 55 bis 45 Molprozent Vinyleinheiten.

6. Gegenstand mit zumindest einer Schicht mit einem Copolymer nach Anspruch 2.

7. Gegenstand nach Anspruch 6 mit einem Copolymer nach Anspruch 3.

8. Gegenstand nach Anspruch 6 in Form eines Filmes, eines Filmlaminats oder eines coextrudierten Filmes.

9. Verfahren, welches die Copolymerisation eines Vinylmonomers der Formel H₂C-CHO₂CR_{y} umfaßt, worin R_{y} eine aus CH₃ und C₂H₅ gewählte Radikale ist, und eines Fluoromonomers mit der Formel R₁R₂C=CR₃F, worin R₁, R₂ und R₃ gleich oder verschieden sind und aus der aus H, Cl und F bestehenden Gruppe ausgewählt sind, und worin R₃, falls R₁ und R₂ F sind, aus Cl und F gewählt ist, wobei es die Copolymerisation des Vinylmonomers und des Fluoromonomers in einem wäßrigen Medium umfaßt, welches Wasser und ein mit Wasser mischbares Co-Lösungsmittel aufweist.

10. Verfahren nach Anspruch 9, worin das Co-Lösungsmittel Essigsäure ist.

## Revendications

1. Copolymère comprenant des mailles fluorées ayant la formule (̵R₁R₂C-CR₃F)̵, dans laquelle R₁, R₂ et R₃ peuvent être identiques ou différents et sont choisis dans le groupe constitué de H et de F, et dans laquelle lorsque R₁ et R₂ sont F, R₃ est choisi parmi H, F et Cℓ; et des mailles vinyliques ayant la formule (̵H₂C-CHRₓ)̵, dans laquelle Rₓ est un radical choisi parmi OH et O₂2Cr_{y}, et dans laquelle R_{y} est un radical choisi parmi CH₃ et C₂H₅, caractérisé en ce qu'il contient 40 à 60 moles % de mailles fluorées et en correspondance 60 à 40 moles % de mailles vinyliques dans une distribution sensiblement alternante.

2. Copolymère selon la revendication 1, dans lequel :
R₁ et R₂ sont F;
R₃ est choisi dans le groupe constitué de H, F et Cl; et
Rₓ est OH.

3. Copolymère selon la revendication 2, dans lequel : R₁, R₂ et R₃ sont F; et Rₓ est OH.

4. Copolymère selon la revendication 1, contenant jusqu'à 10 moles % d'un troisième comonomère.

5. Copolymère selon la revendication 1, ayant de 45 à 55 moles % chacun de mailles fluorées et en correspondance 55 à 45 moles % de mailles vinyliques.

6. Article ayant au moins une couche comprenant un copolymère de la revendication 2.

7. Article selon la revendication 6, comprenant un copolymère de la revendication 3.

8. Article selon la revendication 6, sous forme d'un film, d'un stratifié de film ou d'un film coextrudé.

9. Procédé comprenant la copolymérisation d'un monomère vinylique de la formule H₂C-CHO₂CR_{y} dans laquelle R_{y} est un radical sélectionné parmi CH₃ et C₂H₅ et d'un fluoromonomère ayant la formule R₁R₂C=CR₃F dans laquelle R₁, R₂ et R₃ sont identiques ou différents et sont choisis dans le groupe constitué de H, Cl, et F, et dans lequel R₃ est choisi parmi Cl et F lorsque R₁ et R₂ sont F comprenant la copolymérisation du monomère vinylique et du fluoromonomère dans un milieu aqueux comprenant de l'eau et un cosolvant miscible dans l'eau.

10. Procédé selon la revendication 9, dans lequel le cosolvant est l'acide acétique.
